# DEMANDE DE BREVET EUROPEEN

(11) **EP 2 378 235 A1**
(43) Date de publication de la demande: **19.10.2011**
(21) Numéro de dépôt: 11170832.7
(22) Date de dépôt: 22.06.2009
(51) Int. Cl.: F28F 9/02, F02M 25/07, F28D 7/16, F28F 9/00

(54) **Echangeur de chaleur et carter pour l'échangeur**

(30) Priorité: 26.06.2008 FR 0803603
(62) Demande divisionnaire de: 09793910.2
(71) Demandeur: VALEO SYSTEMES THERMIQUES, 78320 Le Mesnil Saint-Denis (FR)
(72) Inventeur: Garret, Paul, 77250 VENEUX LES SABLONS (FR); Naudin, Yoann, 08300 SAINT LOUP EN CHAMPAGNE (FR); Faille, Philippe, 51100 REIMS (FR)
(74) Mandataire: Metz, Gaëlle

(57) **Abrégé**

L'échangeur de chaleur de l'invention comporte des éléments (2, 2') d'échange et d'écoulement de fluide, au moins une boîte (11) de collection de fluide dans laquelle débouchent les éléments d'échange (2, 2'), au moins une plaque collectrice (10) de maintien des éléments d'échange (2, 2') et au moins un carter (4) de réception des éléments d'échange (2, 2'). Conformément à l'invention, la boîte (11) de collection de fluide est maintenue directement par le carter (4).

Grâce à l'invention, on obtient un échangeur compact.

## Description

### L'invention concerne un échangeur de chaleur.

Un échangeur de chaleur, par exemple utilisé dans l'industrie automobile et plus précisément dans un moteur thermique à combustion interne de véhicule automobile, comprend des éléments d'échange de chaleur et d'écoulement de fluide dans lesquels circulent des fluides échangeant de la chaleur entre eux. Les éléments d'échange de chaleur peuvent par exemple comprendre des tubes, des plaques, des ailettes, des perturbateurs d'écoulement, etc. De nombreuses configurations structurelles sont envisageables. Par exemple, l'échangeur peut comprendre un faisceau de tubes disposés parallèlement les uns aux autres sur une ou plusieurs rangées parallèles entre elles, ces tubes étant agencés pour transporter un premier fluide, tandis qu'un deuxième fluide s'écoule entre les tubes et échange de la chaleur avec le premier fluide. De nombreuses associations de fluides peuvent être envisagées, qu'il s'agisse de liquides et/ou de gaz.

Il est connu des échangeurs comportant un carter de réception des tubes, qui comporte une pluralité de parois formant le volume dans lequel sont reçus les tubes. Il est généralement ouvert à ses deux extrémités, pour que les tubes puissent être reliés à des boîtiers de distribution de fluide: un boîtier de distribution d'entrée et un boîtier de distribution de sortie. Le premier fluide s'écoule dans les tubes depuis le boîtier de distribution d'entrée vers le boîtier de distribution de sortie. Le deuxième fluide s'écoule autour des tubes, depuis une canalisation d'entrée vers une canalisation de sortie, et échange de la chaleur avec le premier fluide.

Les boîtiers de distribution de fluide comportent généralement une plaque collectrice de maintien des tubes et une boîte de collection de fluide, montée sur la plaque collectrice pour former le volume du boîtier. Les tubes passent au travers d'orifices ménagés dans la plaque collectrice et débouchent dans la boîte de collection de fluide.

Généralement, les plaques collectrices sont fixées au carter et les boîtes de collection sont fixées aux plaques collectrices, par exemple par sertissage. A cet effet, chaque plaque collectrice comporte des moyens permettant de venir sertir un bord de la boîte de collection de fluide à laquelle elle est associée; ces moyens s'ajoutent au volume extérieur de l'échangeur, ce qui pose des problèmes d'encombrement.

C'est pourquoi l'invention vise à proposer un échangeur compact.

A cet effet, l'invention concerne un échangeur de chaleur comportant des éléments d'échange et d'écoulement de fluide, au moins une boîte de collection de fluide dans laquelle débouchent les éléments d'échange, au moins une plaque collectrice de maintien des éléments d'échanges et un carter de réception des éléments d'échange, caractérisé par le fait que la boîte de collection de fluide est maintenue directement par le carter.

Grâce à l'invention, la boîte étant maintenue directement par le carter, il n'est plus nécessaire que la plaque collectrice comprenne des moyens de maintien de la boîte. Ainsi, l'encombrement extérieur (volume "hors tout") de l'échangeur est limité à l'encombrement extérieur du carter; la compacité de l'échangeur est donc améliorée.

Selon une forme de réalisation, la plaque collectrice est également maintenue par le carter.

Selon une forme de réalisation, la boîte de collection et le carter sont soudés ou brasés.

Selon une forme de réalisation, la boîte comporte une portion d'extrémité de forme complémentaire à la forme d'une extrémité du carter à laquelle elle est soudée ou brasée, pour assurer une continuité de la surface extérieure de l'échangeur.

Selon une forme de réalisation, la boîte de collection et le carter sont sertis.

Selon une forme de réalisation, le carter comporte au moins une patte de sertissage de la boîte de collection, agencée pour coopérer avec une surface de la boîte de collection pour son maintien.

Selon une forme de réalisation, la plaque collectrice étant également maintenue par le carter, le carter comporte au moins une butée et la boîte de collection et la plaque collectrice sont maintenues entre la patte de sertissage et la butée.

Selon une forme de réalisation, l'échangeur comporte des moyens d'étanchéité entre la boîte de collection de fluide et la plaque collectrice, par exemple un joint d'étanchéité ou un brasage entre la boîte de collection et la plaque collectrice.

L'invention concerne encore un carter de réception d'éléments d'échange et d'écoulement de fluide dans un échangeur de chaleur, les éléments d'échange étant destinés à être maintenus par une plaque collectrice et à déboucher dans une boîte de collection de fluide, caractérisé par le fait que le carter comporte des moyens agencés pour maintenir directement la boîte de collection de fluide.

Selon une forme de réalisation, le carter comporte au moins une patte de sertissage.

Selon une forme de réalisation, le carter comporte une butée agencée pour maintenir la boîte de collection et la plaque collectrice entre la patte de sertissage et la butée.

Selon une forme de réalisation particulière de l'échangeur, les éléments d'échange et d'écoulement de fluide débouchant dans une boîte de collection de fluide à travers des orifices d'une plaque collectrice de maintien des éléments d'échange, les orifices sont pourvus de moyens de rigidification.

Grâce aux moyens de rigidification, la plaque collectrice présente une bonne tenue mécanique et les dimensions des orifices sont garanties.

On note qu'un léger abus de langage a été fait dans la présentation de cette forme de réalisation particulière de l'invention, quand il a été dit que les orifices sont pourvus de moyens de rigidification. En effet, un orifice, c'est une ouverture bordée par une paroi. Il faut donc comprendre que c'est la plaque collectrice qui comporte des moyens de rigidification, dont les orifices sont pourvus; il s'agit donc en fait de moyens de rigidification des parois formant (ou bordant) les orifices.

Selon une forme de réalisation, les éléments d'échange comportent des tubes.

Selon une forme de réalisation, les tubes sont aboutés contre la plaque collectrice, au droit des orifices.

Selon une forme de réalisation, les moyens de rigidification comprennent au moins une bretelle, s'étendant dans un orifice, formant également butée pour un tube associé à l'orifice.

Selon une forme de réalisation, chaque orifice comporte au moins une bretelle de rigidification et de butée d'un tube associé à l'orifice.

Selon une forme de réalisation, ladite bretelle de rigidification et de butée forme partie intégrante de la plaque collectrice et, en particulier, elle est monobloc avec la plaque collectrice.

Selon une forme de réalisation, les moyens de rigidification comprennent au moins un collet bordant un orifice.

Selon une forme de réalisation, chaque orifice est bordé par au moins un collet, remplissant également une fonction de contention d'une extrémité d'un tube associé à l'orifice.

Selon une forme de réalisation, l'extrémité du tube est brasée au collet.

Selon une forme de réalisation, le collecteur étant formé à partir d'une plaque, de préférence une plaque métallique, le collet est formé par pliage de la plaque.

Selon une forme de réalisation, au moins une bretelle de rigidification et de butée d'un tube s'étend entre des collets opposés de part et d'autre de l'orifice.

Selon une forme de réalisation, les orifices présentent une première dimension supérieure à 50mm et sont séparés les uns des autres, dans une deuxième dimension sensiblement perpendiculaire à la première dimension, par une distance inférieure ou égale à 3mm.

Selon une autre forme de réalisation particulière de l'échangeur, le carter étant formé par une pluralité de parois reliées entre elles, il comporte deux parois conformées en L.

Grâce à cette forme de réalisation particulière de l'invention, le carter est formé à partir de deux parois conformées en L, qui peuvent être formées avec le même outillage; en outre, deux parois en L peuvent être emboîtées: le stockage des parois destinées à former des carters est donc facilité. Par ailleurs, il est plus simple de placer les éléments d'échange dans deux parois conformées en L que de les glisser dans une paroi conformée en U.

Selon une forme de réalisation, les deux parois sont de même forme extérieure.

### La fabrication du carter et son stockage sont d'autant plus facilités.

Selon une forme de réalisation, chaque paroi comporte deux volets perpendiculaires l'un à l'autre, un volet de chaque paroi comportant un bord relevé de fixation à un volet de l'autre paroi.

Selon une forme de réalisation, chaque paroi comportant deux volets, l'un des volets comporte un renfoncement agencé pour venir en contact avec des tubes d'écoulement d'un premier fluide assemblés en parallèle et ainsi former des canaux d'écoulement d'un deuxième fluide entre lesdits tubes.

La réalisation d'un tel renfoncement est facilitée par la forme en L des parois, permettant un accès facile de part et d'autre de chaque volet pour y aménager le renfoncement (ce qui n'est pas le cas avec une paroi en U).

Selon une forme de réalisation, le volet comportant le renfoncement comportant également au moins un orifice de connexion à un circuit d'écoulement du deuxième fluide, ledit orifice est ménagé sur une portion du volet distincte du renfoncement pour permettre une meilleure répartition du deuxième fluide dans ses canaux d'écoulement.

Selon une forme de réalisation, chaque paroi comporte au moins une portion d'étanchéité agencée pour combler un jeu au niveau de sa zone de fixation avec l'autre paroi. Il s'agit plus particulièrement d'un jeu entre ces parois et une plaque collectrice de maintien en position des éléments d'échange.

Selon une forme de réalisation, les parois sont brasées l'une à l'autre et, de préférence, les éléments d'échange sont brasés aux parois.

Selon une forme de réalisation, les parois comportent des moyens de maintien des éléments d'échange lors du brasage.

Selon cette forme de réalisation particulière de l'échangeur, le carter objet de l'invention étant formé par une pluralité de parois reliées entre elles, il comporte deux parois conformées en L.

Ce carter présente les avantages du carter de l'échangeur présenté ci-dessus.

Le carter peut comporter les caractéristiques du carter de l'échangeur présenté ci-dessus.

L'invention s'applique à tout échangeur de chaleur. Elle s'applique particulièrement bien à un échangeur de chaleur permettant de refroidir un gaz avec de l'eau, et plus particulièrement encore à un refroidisseur des gaz d'échappement dits "recirculés" d'un moteur thermique à combustion interne de véhicule automobile ou à un refroidisseur d'air de suralimentation d'un tel moteur.

L'invention sera mieux comprise à l'aide de la description suivante de la forme de réalisation préférée de l'échangeur de l'invention, en référence aux planches de dessins annexées, sur lesquelles:
- la figure 1 représente une vue en perspective éclatée d'une première forme de réalisation de l'échangeur de l'invention;
- la figure 2 représente une vue en perspective de l'échangeur de la figure 1 avec ses divers éléments montés les uns aux autres;
- la figure 3 représente une vue en perspective d'une extrémité de l'échangeur de la figure 2 avec une boîte de distribution de fluide fixée à son carter;
- la figure 4 représente une vue en perspective d'une portion du perturbateur de l'écoulement de l'eau de l'échangeur de la figure 2;
- la figure 5 représente une vue en perspective de l'une des plaques collectrices de l'échangeur de la figure 2;
- la figure 6 représente une vue en coupe d'une extrémité de l'échangeur de la figure 2, dans le plan VI-VI de la figure 2;
- la figure 7 est une vue en bout de la droite, dans l'axe de la direction de sa longueur, de l'échangeur de la figure 2;
- la figure 8 est une vue en coupe, de profil, d'une extrémité de l'échangeur de la figure 2;
- la figure 9 est une vue agrandie de la zone A de la figure 7;
- la figure 10 est une vue en coupe de profil de la zone de fixation du carter et de la boîte de distribution de l'échangeur de la figure 3;
- la figure 11 représente une vue en perspective éclatée d'une deuxième forme de réalisation de l'échangeur de l'invention;
- la figure 12 représente une vue en perspective de l'échangeur de la figure 11 avec ses divers éléments montés les uns aux autres;
- la figure 13 représente une vue en coupe d'une extrémité de l'échangeur de la figure 12, dans le plan XIII-XIII de la figure 12;
- la figure 14 représente une vue en coupe, de profil, d'une extrémité de l'échangeur de la figure 12;
- la figure 15 représente une vue en coupe dans un plan parallèle au plan de coupe de la figure 14, au niveau d'une butée du carter de l'échangeur;
- la figure 16 est une représentation schématique de deux vues en coupe distinctes du collecteur de la figure 5: l'une dans un plan ne coupant aucune bretelle (dessin du haut) et l'autre dans un plan coupant une bretelle (dessin du bas) et
- la figure 17 est une vue en perspective de la paroi d'un carter selon une forme de réalisation particulière.

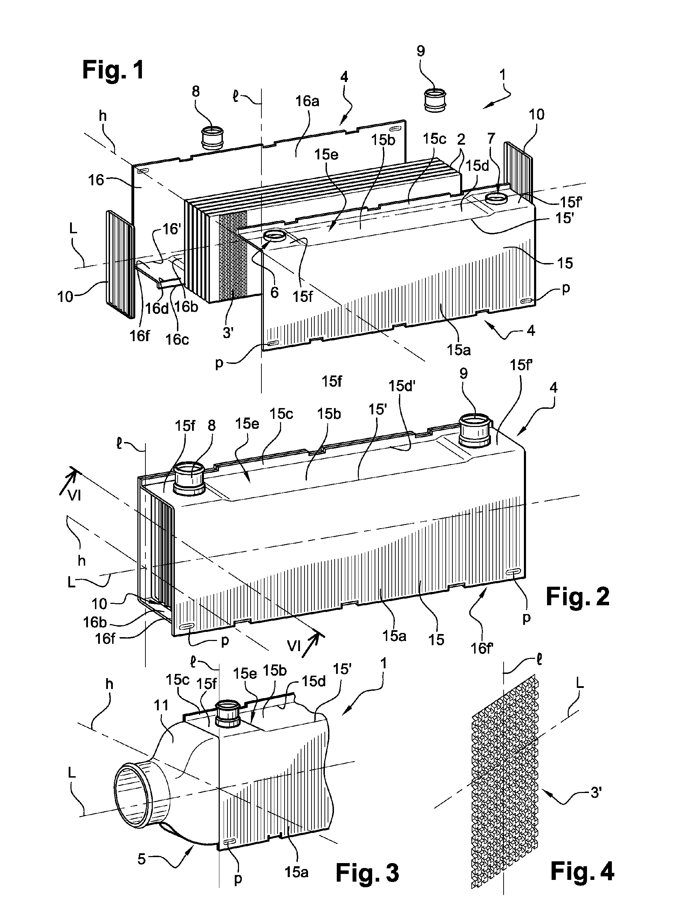

En référence aux figures et plus particulièrement à la figure 1, un échangeur de chaleur 1 selon une première forme de réalisation comporte des éléments 2, 2', 3, 3' d'échange de chaleur, un carter 4 de réception de ces éléments 2, 2', 3, 3', un boîtier 5 de distribution d'entrée d'air et un boîtier (non représenté) de distribution de sortie d'air. Le carter 4 comporte des orifices 6, 7 de connexion à des canalisations 8, 9 d'écoulement d'eau, en l'espèce une canalisation d'entrée 9 et une canalisation de sortie 8, reliées à un circuit d'eau dans lequel l'échangeur 1 est monté. Dans la forme de réalisation décrite, les différents éléments de l'échangeur 1 sont brasés les uns aux autres; de tels échangeurs avec leurs éléments brasés sont bien connus de l'homme du métier.

L'échangeur 1 décrit est un échangeur dit "air-eau", c'est-à-dire un échangeur dans lequel les fluides qui échangent de la chaleur sont l'air et l'eau. Il s'agit par exemple d'un refroidisseur par eau des gaz d'échappement dits "recirculés" d'un moteur thermique à combustion interne de véhicule automobile ou encore d'un refroidisseur d'air de suralimentation d'un tel moteur; l'eau est de préférence de l'eau du circuit de refroidissement dit "basse température" dudit moteur; il s'agit typiquement d'eau glycolée.

En référence à la figure 2, l'échangeur 1 est globalement de forme parallélépipédique. Par convention et pour simplifier sa description, on définit la direction L de la longueur de l'échangeur 1, qui est sa plus grande dimension, et dans la direction de laquelle s'écoulent les fluides, la direction 1 de la largeur de l'échangeur 1 et la direction h de sa hauteur (ou épaisseur). Par la suite, on confondra la direction de ces dimensions avec leur valeur; autrement dit, L, 1 ou h désigneront respectivement indifféremment la longueur, la largeur et la hauteur de l'échangeur 1 ou la direction de la longueur, la direction de la largeur et la direction de la hauteur de l'échangeur 1. En outre, les notions d'externe (ou extérieur) et interne (ou intérieur) qui pourraient être utilisées dans la description se réfèrent à des positions relatives d'éléments par rapport à l'extérieur ou l'intérieur de l'échangeur 1.

Les éléments d'échange comportent des tubes 2 d'écoulement de l'air, dans lesquels sont montées des ailettes 2' de perturbation de cet écoulement d'air. Les tubes 2 définissent entre eux des canaux 3 d'écoulement de l'eau, dans lesquels sont montés des perturbateurs 3' de cet écoulement d'eau.

Plus précisément, les tubes 2 d'écoulement d'air sont de forme aplatie; leur grande dimension (qui est la direction globale de l'écoulement de l'air en leur sein) est parallèle à la direction de la longueur L de l'échangeur 1 et leur section transversalement à cette longueur L est de forme rectangulaire; le rectangle dont la section de chaque tube 2 a la forme présente une dimension parallèle à la largeur 1 de l'échangeur 1 et une dimension parallèle à la hauteur h de 1' échangeur 1. Chaque tube 2 présente une longueur sensiblement égale à la longueur L de l'échangeur 1 et une largeur sensiblement égale à la largeur 1 de l'échangeur 1; sa dimension parallèle à la hauteur h de l'échangeur 1 est inférieure à la hauteur de l'échangeur 1, puisque les tubes 2 sont empilés dans cette dimension; cette dimension est en l'espèce relativement faible, ce qui donne aux tubes 2 leur forme aplatie; il s'agit en fait de leur épaisseur. A titre d'exemple, l'épaisseur des tubes 2 peut être égale à environ 7 ou 8 mm pour chaque tube 2, la largeur 1 des tubes 2 étant égale à environ 100 mm. Par ailleurs, les espaces inter-tubes (c'est-à-dire les canaux 3 d'écoulement d'eau) peuvent par exemple être de dimension (parallèlement à la hauteur h de l'échangeur 1) inférieure à 3mm, par exemple sensiblement égale à 2mm.

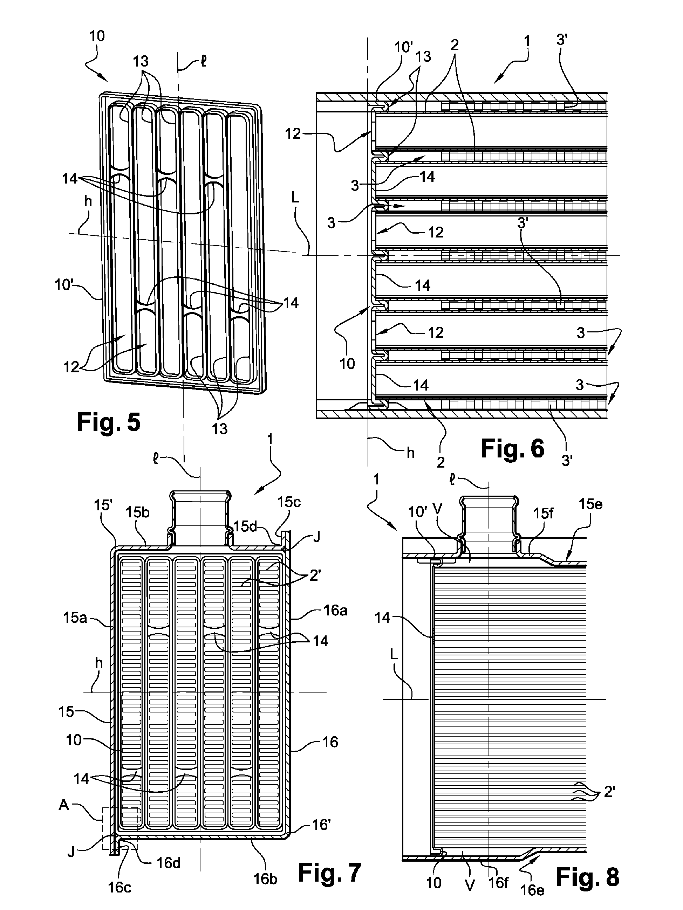

En référence à la figure 7, les ailettes 2' sont montées dans le volume intérieur des tubes 2. La fonction de ces ailettes 2' est de perturber l'écoulement de l'air dans les tubes 2 pour faciliter les échanges thermiques entre l'air et l'eau au travers des parois des tubes 2. Ces ailettes 2' sont bien connues de l'homme du métier et il n'est pas nécessaire de les décrire en détails; elles sont ici de forme ondulée et leur section présente, en vue en bout dans l'axe de la longueur L de l'échangeur 1, une forme de serpentin entre les parois de chaque tube 2.

Les tubes 2 sont assemblés parallèlement les uns aux autres, l'ensemble des tubes 2 formant un empilement dans la direction de la hauteur h de l'échangeur 1 (on parle également de faisceau de tubes); la dimension du faisceau 1 parallèle à la hauteur h de l'échangeur 1 est sensiblement égale à la hauteur h de l'échangeur 1. Ainsi, les tubes 2 sont assemblés les uns aux autres, parallèles les uns aux autres, et permettent la circulation d'air en leur sein, globalement dans la direction de la longueur L de l'échangeur. L'échangeur 1 ici décrit comporte un faisceau de six tubes 2; bien entendu, il pourrait en comporter un nombre inférieur ou supérieur; on note ici que, dans certains cas, la hauteur h de l'échangeur 1 peut être plus importante que sa largeur 1, si le nombre de tubes 2 est suffisamment important.

Les tubes 2 ménagent entre eux des canaux 3 d'écoulement d'eau, dans lesquels sont fixés, ici par brasage, des perturbateurs 3' de l'écoulement de l'eau entre les tubes 2. Une portion de perturbateur 3' est représentée sur la figure 4. Sur la figure 1, on n'a également représenté qu'une portion de perturbateur 3'; en l'occurrence, les perturbateurs 3' se présentent sous la forme de plaques qui s'étendent sensiblement sur toute la surface latérale des tubes 2 (on parle, par surface latérale, de la surface des tubes 2 définie par les dimensions parallèles à la longueur L et à la largeur 1 de l'échangeur 1), hormis à proximité des extrémités (dans la direction de la longueur L de l'échangeur 1) des tubes 2, comme on le verra plus loin. Par ailleurs, chaque perturbateur 3' remplit, dans la direction parallèle à la hauteur h de l'échangeur 1, tout l'espace du canal 3 de circulation d'eau dans lequel il est monté, puisqu'il est brasé de chaque côté aux surfaces des tubes 2 définissant ledit canal 3. On note ici que des perturbateurs 3' sont montés entre tous les tubes 2 mais également entre les tubes 2 d'extrémités et les parois du carter 4, comme on le voit sur la figure 6.

Les perturbateurs 3' ont une forme créant des turbulences dans l'écoulement d'eau passant à travers eux. En l'espèce, les perturbateurs 3' se présentent sous la forme d'une paroi ondulée, ces ondulations se faisant à angles droits et dans les deux dimensions (L, 1) de la plaque formant le perturbateur 3'. Autrement dit, les perturbateurs 3' présentent, tant dans la direction parallèle à la largeur 1 de l'échangeur 1 que dans la direction parallèle à la longueur L de l'échangeur 1, des éléments de paroi crénelés, les rangées d'éléments étant décalées les unes par rapport aux autres. Des évidements sont par ailleurs prévus périodiquement dans les éléments de paroi; les motifs définissant la forme des perturbateur 3' sont périodiques. Il n'est pas nécessaire de décrire plus précisément la structure des perturbateurs 3', dans la mesure où ils sont bien connus de l'homme du métier et que leur structure est bien visible sur la figure 4. De l'eau circule entre les tubes 2 de circulation d'air et son écoulement est perturbé par les perturbateurs 3', ce qui facilite les échanges thermiques avec l'air au travers des parois des tubes 2.

Comme évoqué plus haut, l'échangeur 1 comporte, à chacune de ses extrémités (dans la dimension de sa longueur L), un boîtier de distribution d'air. Du côté gauche (sur les figures), il s'agit d'un boîtier 5 de distribution d'entrée d'air et, du côté droit, il s'agit d'un boîtier (non représenté) de distribution de sortie d'air. Les extrémités des tubes 2 de circulation d'air sont connectées aux boîtiers 5 de distribution d'air, le volume intérieur des tubes 2 étant ainsi en communication fluidique avec le volume intérieur des boîtiers 5 de distribution; autrement dit, les tubes 2 débouchent dans les boîtiers 5. Les boîtiers 5 de distribution sont reliés à des canalisations d'un circuit d'air dans lequel est monté l'échangeur 1. L'air est introduit dans les tubes 2 par l'intermédiaire du boîtier 5 de distribution d'entrée et est recueilli en sortie des tubes 2 par le boîtier de distribution de sortie.

La structure du boîtier 5 de distribution d'entrée va être décrite. La position et la forme de ses éléments sont décrites, par souci de simplification de l'exposé, en position montée du boîtier 5 sur l'échangeur 1. Le boîtier de distribution de sortie (non représenté) est ici semblable au boîtier d'entrée 5 et monté de manière symétrique; bien entendu, selon une autre forme de réalisation, ils peuvent être différents.

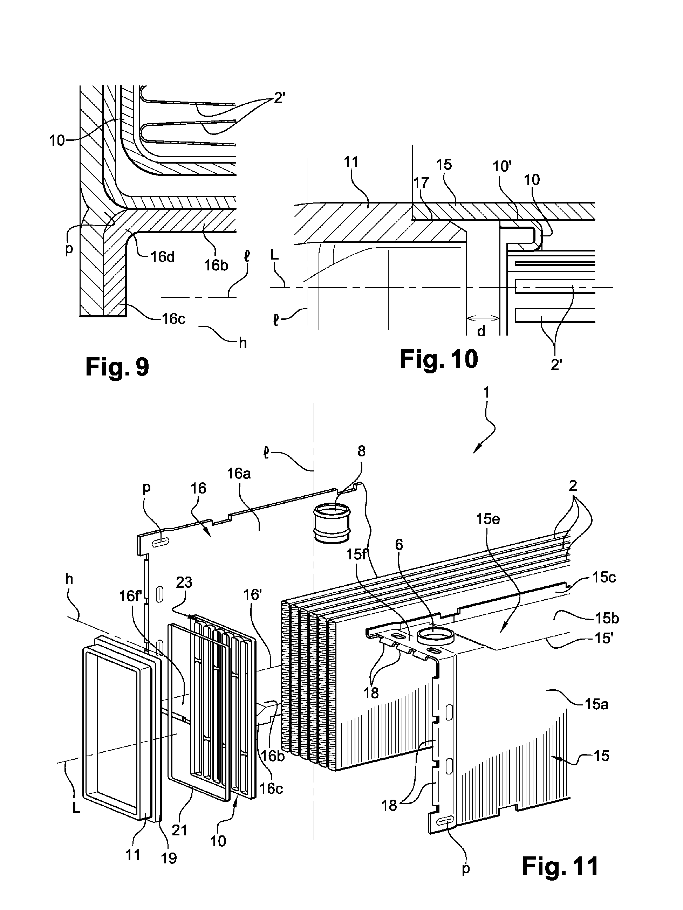

Le boîtier 5 de distribution d'entrée comporte une plaque collectrice 10, dont la fonction est de maintenir les tubes 2 en position, de guider l'écoulement d'air entre le volume intérieur du boîtier de distribution 5 et les tubes 2 et de bloquer l'écoulement d'eau vers le volume intérieur du boîtier 5, tout en interdisant aux écoulements d'air et d'eau de confluer; la plaque collectrice 10 est généralement dénommée par l'homme du métier par le terme de collecteur 10. On note que le collecteur 10 du boîtier de distribution de sortie est ici identique au collecteur 10 du boîtier de distribution d'entrée et désigné, sur les figures, par le même nombre de référence 10. Le boîtier 5 comporte par ailleurs une boîte 11 de collection d'air, ou couvercle 11, ou boîte collectrice 11, formant avec le collecteur 10 le volume du boîtier 5. Plus précisément, en référence à la figure 10, le volume du boîtier 5 est ici formé par la boîte collectrice 11, le collecteur 10 et une portion de carter 4. En effet, dans la forme de réalisation représentée sur les figures 1 à 10, le collecteur 10 est fixé au carter 4 à une distance d de l'extrémité de la boîte collectrice 11 elle-même fixée au carter 4, comme on le verra plus loin; de ce fait, le volume du boîtier 5 est formé en partie par la portion de carter 4 séparant le collecteur 10 de la boîte collectrice 11.

En référence à la figure 5, le collecteur 10 se présente sous la forme d'une plaque montée transversalement à la longueur L de l'échangeur 1 pour recevoir les extrémités des tubes 2. Le collecteur 10 est percé d'une pluralité d'orifices 12, chaque orifice 12 étant associé à un tube 2. Chaque orifice 12 a une forme correspondant à la section d'un tube 2. Chaque orifice 12 est bordé par des parois 13 ou collets 13 ou rebords 13 de rigidification du collecteur 10. De tels collets 13 permettent de garantir que les dimensions des orifices 12 sont constantes et définies; en effet, les collets 13 forment des parois rigidifiées définissant (bordant) les orifices 12, c'est-à-dire qu'ils forment des moyens de rigidification de ces orifices 12.

Les collets 13 remplissent par ailleurs une fonction de contention de l'extrémité des tubes 2 qui leur sont associés. Ces collets 13 s'étendent globalement perpendiculairement au plan global de la plaque formant le collecteur 10, parallèlement donc à la direction de la longueur L de l'échangeur 1, l'extrémité 27 en saillie de ces collets 13 étant dirigée vers l'intérieur de l'échangeur 1; autrement dit, les collets 13 de rigidification et de contention des tubes 2 s'étendent, à partir du collecteur 10, autour des tubes 2, dont ils enserrent les extrémités. Sur la figure 5, le collecteur 10 est vu de derrière et ses collets 13 s'étendent vers l'avant. La fonction des collets 13 est de maintenir les tubes 2 en position: à cet effet, les extrémités des tubes 2 sont glissées dans ces collets 13, formant glissière pour les enserrer; chaque collet 13 forme une surface de contact avec la surface de l'extrémité du tube 2 qui lui est associé, permettant leur brasage l'une à l'autre. Les tubes 2, ainsi brasés aux collets 13 bordant les orifices 12 du collecteur 10, sont fixés en position.

Chaque orifice 12 du collecteur 10 est par ailleurs pourvu d'une languette 14 ou bretelle 14 ou lien 14 de rigidification. Les bretelles 14 s'étendent à la base des collets 13 de rigidification et de contention des tubes 2, c'est-à-dire du côté opposé à leur extrémité 27 en saillie; ainsi, les bretelles 14 s'étendent du côté extérieur de l'échangeur 1. Dans la forme de réalisation décrite, les bretelles 14 sont ménagées dans les orifices 12 du collecteur 10 environ au quart de sa dimension parallèle à la largeur 1 de l'échangeur 1, en alternance, d'un orifice 12 à l'autre, d'un côté et de l'autre du collecteur 10 sur cette dimension. Grâce à l'alternance des bretelles 14 de part et d'autre du collecteur 10, la fonction de rigidification qu'elles remplissent est répartie et homogène sur le collecteur 10.

Une fonction de rigidification des bretelles 14 est de garantir l'écartement des collets 13 bordant les orifices 12 pour garantir les dimensions des orifices 12, c'est-à-dire pour garantir que tous les orifices 12 présentent la même dimension, de manière constante, dans la direction parallèle à la hauteur h de l'échangeur 1, et ce malgré le grand élancement des collets 13. Par élancement, on entend le rapport de la grande dimension des collets 13 (sa dimension parallèle à la largeur 1 de l'échangeur 1) avec l'une des petites dimensions des collets 13 (soit sa dimension parallèle à l'épaisseur h de l'échangeur 1, soit sa dimension parallèle à la longueur L de l'échangeur 1).

Ainsi, les collets 13 et les bretelles 14 se complètent pour remplir une fonction de rigidification du collecteur 10 et ainsi garantir les dimensions de ses orifices 12 et leur stabilité. Ces éléments 13, 14 se combinent d'autant plus que les bretelles 14 sont solidaires des collets 13, puisqu'elles sont monobloc avec eux et s'étendent à partir de leur base.

Une autre fonction des bretelles 14 est de former une butée pour les extrémités des tubes 2 glissées entre les collets 13 (il s'agit donc d'une butée axiale, sur l'axe de la longueur L de l'échangeur 1). Ainsi, les tubes 2 sont aboutés contre le collecteur 10 au droit des orifices 12, ce qui signifie qu'ils ne traversent pas les orifices 12 mais sont arrêtés au niveau (au droit) des orifices 12 par les bretelles 14. On voit sur la figure 6 une vue en coupe des extrémités des tubes 2 glissées dans les collets 13, en butée sur les bretelles 14 et brasées aux collets 13; cette coupe est faite dans le plan VI-VI de la figure 2, qui est un plan coupant une zone du collecteur 10 au niveau de bretelles 14.

Grâce aux bretelles 14, chaque tube 2 est parfaitement positionné au droit de l'orifice 12 auquel il est associé. Comme les dimensions des orifices 12 sont fixées de manière stable par les bretelles 14, il n'y a pas de fluctuations notables, le long de la périphérie de l'extrémité d'un tube 2, dans l'écartement entre la surface extérieure de cette extrémité et la surface intérieure des collets 13 qui l'enserrent; lesdites surfaces (des collets 13 et des extrémités des tubes 2) peuvent ainsi être brasées les unes aux autres avec un brasage de qualité, puisqu'il est régulier. En outre, il est possible de braser également les tubes 2, par leur extrémité, sur les bretelles 14; ces dernières augmentent ainsi la surface de brasage disponible et donc la tenue mécanique de l'échangeur 1.

Bien entendu, d'autres répartitions ou dispositions sont envisageables pour les bretelles 14. Par exemple, les bretelles 14 peuvent toutes s'étendre au milieu des orifices 12 du collecteur 10; dans ce cas, elles sont toutes alignées. Par exemple encore, chaque orifice 12 peut comporter une pluralité de bretelles de rigidification 14. Par ailleurs, d'autres moyens de rigidification, remplissant également une fonction de butée pour les tubes 2, peuvent être prévus. Dans toutes les cas, on comprend que les moyens de rigidification, et donc ici les bretelles 14, forment bien des moyens de rigidification d'un orifice 12 et non pas des moyens de séparation de deux orifices; chaque orifice 12, avec ses moyens de rigidification 14, est associé à un unique tube 2; il ne faut donc pas confondre moyens de rigidification (bretelles 14) et moyens de séparation de deux orifices 12. D'ailleurs, dans l'hypothèse où le collecteur 10 comprendrait une pluralité d'orifices alignés dans sa direction parallèle à la largeur de l'échangeur 1, de tels orifices seraient séparés par des moyens distincts des bretelles 14; en particulier, et de préférence, une partie de collet de rigidification et de contention des tubes s'étendrait entre les orifices successifs dans cette direction 1.

On voit sur les figures 6 et 7 la manière dont est positionné le collecteur 10 par rapport aux tubes 2 et donc la manière dont il remplit sa fonction, non seulement de maintien des tubes 2 en position, mais également de guidage de l'air entre le volume de la boîte collectrice 11 et les tubes 2 et de blocage de l'écoulement de l'eau vers la boîte collectrice 11. Dans les formes de réalisation présentées, le collecteur 10 est contenu dans le carter 4; autrement dit, le carter 4 est un carter 4 de réception des éléments d'échange 2, 2', 3, 3' et des collecteurs 10.

Les tubes 2 sont aboutés sur le collecteur 10 au droit des orifices 12, avec leurs parois d'extrémités brasées aux collets 13; les extrémités des tubes 2 sont ainsi séparées les unes des autres par ces collets 13; les espaces de séparation entre les tubes 2 successifs définissent les canaux 3 d'écoulement du flux d'eau, dans lesquels sont montés les perturbateurs 3'. Comme les collets 13 sont brasés aux extrémités des tubes 2 et remplissent transversalement (par rapport à la direction de la longueur L de l'échangeur 1) tout l'espace entre elles, ces collets 13 empêchent l'eau de s'écouler dans le volume de la boîte collectrice 11; en outre, ces collets 13 empêchent également l'eau de s'écouler dans les tubes 2.

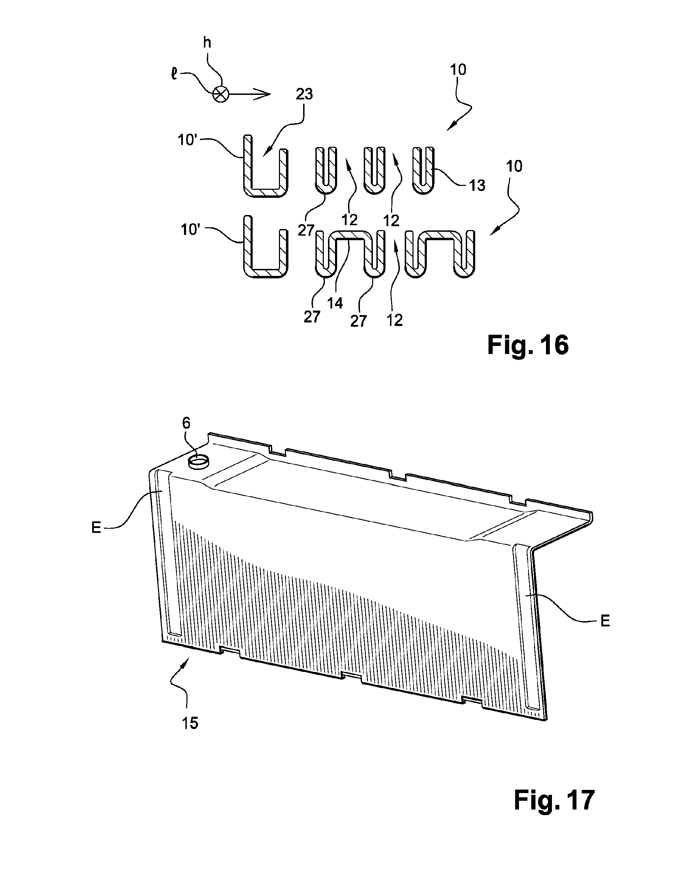

La structure du collecteur 10 de l'échangeur va encore être décrite, pour une meilleure compréhension, en référence à la figure 16. On voit sur cette figure des représentations en coupe du collecteur 10, dans un plan transversal à ce qu'est la largeur 1 de l'échangeur 1 lorsque le collecteur 10 y est monté. Autrement dit, il s'agit d'une coupe dans un plan coupant les orifices 12 du collecteur 10 transversalement à leur grande dimension.

Le collecteur 10 est formé à partir d'une plaque plane métallique. Cette plaque est emboutie pour former les collets 13 et poinçonnée pour former les orifices 12 bordés par les collets 13. Les collets 13 se présentent donc sous la forme de doubles parois parallèles à la grande dimension 1 du collecteur 10, ces doubles parois étant reliées par leur extrémité libre 27. Les bretelles 14 sont formées au cours de l'opération de poinçonnage par non-poinçonnage des zones correspondant aux bretelles 14. Les bretelles 14 font ainsi partie intégrante du collecteur 10 et, plus précisément, sont monoblocs avec ce collecteur 10 et notamment ses collets 13.

Le bord périphérique du collecteur 10 est relevé pour former la gorge périphérique 23 du collecteur 10 (cette gorge 23 est ainsi formée entre le bord périphérique et les parois extérieures des collets 13). Dans la première forme de réalisation de l'échangeur 1 présentée en référence aux figures 1 à 10, la gorge 23 n'est pas exploitée en tant que telle mais le relèvement du bord externe du collecteur 10 permet de présenter une surface 10' perpendiculaire au plan du collecteur 10 et pouvant être brasée aux surfaces internes du carter 4. Dans la deuxième forme de réalisation de l'échangeur 1 présentée en référence aux figures 11 à 15, la gorge périphérique 23 permet de recevoir le joint d'étanchéité 21.

Le pliage des collets 13 autour de leur grand axe garantit que les collets 13 ne vrillent pas lors de la formation des orifices 12 par poinçonnage de la plaque. On note d'ailleurs que, selon une forme de réalisation non représentée, les collets repliés 13 peuvent être les seuls moyens de rigidification, sans qu'il soit nécessaire de prévoir des bretelles 14.

Dans chaque orifice 12, la bretelle 14 s'étend entre des collets 13 opposés de part et d'autre de l'orifice 12, maintenant et garantissant ainsi l'écartement entre ces collets 13. Les bretelles 14 faisant partie intégrante du collecteur 10, et plus particulièrement étant monobloc avec lui, la rigidité de l'ensemble est d'autant mieux assurée.

Grâce aux moyens de rigidification (collets repliés 13 et/ou bretelles 14), on peut former un collecteur 10 avec des orifices 12 allongés, séparés par des parois 13 de faible largeur (correspondant à une distance inter-tubes faible); ainsi, les collets 13 présentent un grand élancement. Il est donc possible d'associer les orifices 12 à des tubes 2 de section aplatie et allongée. Cela permet d'avoir une section de passage d'air importante pour une épaisseur h des tubes 2 faible, et donc de fabriquer un échangeur 1 avec un bon débit d'air malgré un encombrement faible dans la direction de son épaisseur h; cela est particulièrement avantageux lorsque l'encombrement du moteur dans lequel l'échangeur 1 doit être monté impose une limite à l'épaisseur h de l'échangeur 1, qui doit donc être relativement plat.

A titre d'exemple, la plaque permettant de former le collecteur 10 présentant une épaisseur d'environ 1mm, on peut former un collecteur 10 avec des orifices 12 de 100mm par 7 ou 8mm environ, avec un espace inter-tubes de 2 à 3mm. Les collets 13 peuvent présenter un encombrement (dimension parallèle à la direction de la longueur L de l'échangeur 1) sensiblement égal à 4mm; ainsi, en retranchant l'épaisseur des bretelles 14 (1mm), les collets 13 présentent une surface utile de contention de l'extrémité des tubes 2 et de brasage avec elles d'environ 3mm.

Les éléments d'échanges, à savoir les tubes 2 avec leurs ailettes 2' et les canaux 3 avec leurs perturbateurs 3', sont contenus dans un carter 4 de réception. Le carter 4 comporte une première paroi 15 et une deuxième paroi, ces parois 15, 16 étant conformées en L; autrement dit, chaque paroi 15, 16 a une section transversale (par rapport à la direction de la longueur L de l'échangeur 1) en forme de L. Chaque paroi 15, 16 est conformée en L par pliage autour d'une arête 15', 16', pour former deux volets (15a, 15b), (16a, 16b) perpendiculaires l'un à l'autre.

Plus précisément, chaque paroi 15, 16 comporte ici un grand volet 15a, 16a et un petit volet 15b, 16b. Le grand volet 15a, 16a se présente sous la forme une plaque rectangulaire de dimensions sensiblement égales à la longueur L de l'échangeur 1 et à sa largeur 1, tandis que le petit volet 15b, 16b se présente sous la forme d'une plaque rectangulaire de dimensions sensiblement égales à la longueur L de l'échangeur 1 et à sa hauteur h. Les notions de grand et petit volets sont introduites ici pour permettre une désignation distincte de chacun des volets (15a, 15b), (16a, 16b) de chaque paroi 15, 16; il se trouve que, dans la forme de réalisation présentée, en raison des dimensions relatives de la hauteur h et de la largeur 1 de l'échangeur 1, un volet (15a, 15b) est plus grand que l'autre (16a, 16b), mais il va de soi que si les proportions entre ces dimensions étaient inversées, les notions de grand et petit volets seraient inversées; en bref, il faut comprendre que ces notions de grand et petit ne sont pas une contrainte ou une limitation pour l'échangeur 1, mais qu'il est plus simple de les désigner ainsi car c'est le cas en l'espèce.

Les canalisations d'entrée 9 et de sortie 8 d'eau dans l'échangeur 1 sont ici connectées à une même face de l'échangeur 1. Ainsi, les orifices 6, 7 de connexion à ces canalisations 8, 9 sont percés sur un même volet d'une seule des deux parois 15, 16, en l'espèce sur le petit volet 15b de la première paroi 15.

Les deux parois 15, 16 sont identiques à l'exception des orifices 6, 7 percés dans le petit volet 15b de la première paroi 15; en particulier, leurs formes extérieures sont donc identiques. De ce fait, leur fabrication est simplifiée car elle peut être unifiée, tandis que leur stockage est facilité, puisque la forme extérieure des parois 15, 16 les rend emboîtables les unes avec les autres. Ainsi, il est possible qu'un unique outillage fabrique l'ensemble des parois en forme de L, dont seulement la moitié sont subséquemment percées d'orifices. Les parois peuvent alors être stockées aisément et de manière optimale (en ce qui concerne leur encombrement), puisqu'elles sont simplement emboîtées et empilées les uns sur les autres.

Pour former le carter 4 sous sa forme définitive, les parois 15, 16 sont fixées l'une à l'autre autour des éléments d'échange 2, 2', 3, 3' et des collecteurs 10; dans le cas d'espèce, elles sont brasées. A cet effet, chaque paroi 15, 16 comporte, à l'extrémité libre de son petit volet 15b, 16b, un bord relevé 15c, 16c, qui est un bord 15c, 16c de fixation au grand volet 16a, 15a de l'autre paroi 16, 15. Ce bord relevé 15c, 16c s'étend perpendiculairement au petit volet 15b, 16b, à partir d'une arête de pliage 15d, 16d par laquelle il lui est relié; cette arête de pliage 15d, 16d est parallèle à l'arête 15', 16' de pliage entre le grand et le petit volet (15a, 15b), (16a, 16b).

L'orientation des bords relevés 15c et 16c, ici, perpendiculairement aux petits cotés 15b et 16b et vers l'extérieur permet une bonne jonction entre le carter 4 et les collecteurs 10. On entend par vers l'extérieur le fait que le ou les bords relevés 15c, 16c ne soient pas, ici, en contact avec les tubes 2. Dans le mode de réalisation illustré ici, seule la ou les arêtes de pliage est en contact avec les éléments d'échange. Encore autrement dit, ici, le bord relevé 15c ou 16c s'étend en dehors du volume défini par les éléments d'échange 2, 2', 3, 3' et/ou le collecteur 10.

Les parois 15, 16 conformées en L sont mises en position autour des éléments 2, 2', 3, 3' d'échange de chaleur et des collecteurs 10 dans des positions inversées, autrement dit tête-bêche; dans cette position, le bord relevé 15c, 16c du petit volet 15b, 16b de chaque paroi 15, 16 vient en appui sur l'extrémité libre du grand volet 16a, 15a de l'autre paroi 16, 15. Les différents éléments des parois 15, 16 sont configurés pour que l'extrémité libre - parallèle à l'arête de pliage 15d, 16d - de chaque bord relevé 15c, 16c s'étende au droit de l'extrémité libre du grand volet 16a, 15a contre lequel il est en appui. Dans cette position, les parois 15, 16 du carter 4 sont brasées ensemble, par brasage des surfaces de leurs volets (15a, 15b), (16a, 16b) en contact les unes contre les autres (bords relevés 15c, 16c contre extrémités des grands volets 16a, 15a). Une fois les parois 15, 16 fixées, les volets (15a, 15b), (16a, 16b) des parois 15, 16 conformées en L forment les quatre faces latérales de l'échangeur 1 (on parle de faces latérales par rapport à la direction de sa longueur L).

On note ici que, dans la forme de réalisation décrite, le collecteur 10 est fixé au carter 4 par brasage. Plus précisément, la surface extérieure 10' qui s'étend le long de sa périphérie est brasée à la surface interne des volets (15a, 15b), (16a, 16b) des parois 15, 16.

La forme en L des parois 15, 16 facilite la mise en place du carter 4 autour des éléments d'échange 2, 2', 3, 3'. En effet, il est compliqué de loger un faisceau de tubes dans une paroi conformée en U dont les dimensions sont ajustées à la forme extérieure du faisceau; en particulier, il faut tenir le faisceau pour qu'il reste en position, tandis qu'il faut glisser ce faisceau entre les parois formant les branches du U dont la paroi a la forme, ce qui est difficile car il est souhaitable que le jeu ne soit pas trop important entre eux. En revanche, il est très simple de venir positionner une première paroi 15, 16 en contact sur deux des faces du faisceau de tubes 2, puis de venir positionner la deuxième paroi 16, 15 et enfin de les braser. En particulier, pour positionner ainsi les parois 15, 16, il n'est pas nécessaire de tenir très fermement les tubes 2 et perturbateurs 3' en position, car ils viennent se positionner d'eux-mêmes sous l'action de la deuxième paroi 16, 15 lorsqu'elle est mise en place. En outre, il n'y a pas de problème de jeu, puisqu'il n'y a pas glissement du faisceau entre des parois mais plaquage des parois 15, 16 contre le faisceau.

Grâce à la forme en L des parois 15, 16 du carter 4, les volets 15a, 16a des parois 15, 16 parallèles aux faces latérales des tubes 2 ne présentent pas de saillie hors du volume de l'échangeur 1; autrement dit, les grands volets 15a, 16a sont plans et aucun élément ne fait saillie hors d'eux dans la direction qui leur est perpendiculaire. Cette caractéristique résulte du fait que, du fait de la forme en L des parois 15, 16, la fixation se fait le long de surfaces parallèles aux plans de ces grands volets 15a, 16a (les surfaces de contact entre les bords relevés 15c, 16c des petits volets 15b, 16b et les grands volets 15a, 16a). Or, lors du brasage de l'échangeur 1, le montage de brasage, c'est-à-dire le dispositif permettant de mettre en oeuvre ce brasage, comporte des outillages, par exemple des presses, qui viennent en appui sur les faces du carter 4 parallèles aux faces latérales des tubes 2 (ici les grands volets 15a, 16a), car les surfaces de brasage des tubes 2 aux perturbateurs 3' leur sont parallèles et qu'il convient donc d'appliquer les efforts perpendiculairement à ces surfaces. Comme les grands volets 15a, 16a sont plans, le contact des outillages sur eux est simplifié car les outillages peuvent être mis en contact sur toute la surface des volets 15a, 16a, sans contraintes d'encombrement.

Le petit volet 15a, 16a de chaque paroi 15, 16 comporte un renfoncement 15e, 16e ou cuvette 15e, 16e dans sa partie centrale. Ce renfoncement 15e, 16e est obtenu par emboutissage de la paroi 15, 16. Cet embouti 15e, 16e est agencé pour venir en contact avec les tranches des tubes 2 pour être brasé à elles; plus précisément, c'est sa surface interne qui est brasée aux tranches des tubes 2. Par tranche des tubes 2, on comprend leur paroi s'étendant dans le plan défini par la direction de la longueur L de l'échangeur 1 et la direction de l'épaisseur h (la hauteur h) de l'échangeur 1. La fonction de ce brasage est d'empêcher la circulation d'eau à l'extérieur des canaux 3 d'écoulement d'eau ménagés entre les tubes 2 et donc de garantir que l'eau s'écoule uniquement le long des surfaces des parois latérales des tubes 2, pour leur permette d'échanger un maximum de chaleur avec l'air s'écoulant dans les tubes 2. Ainsi, le brasage des renfoncements 15e, 16e du carter 4 force l'eau à circuler entre les tubes 2. En outre, ce brasage augmente la tenue mécanique globale de l'échangeur 1.

La formation d'un tel renfoncement 15e, 16e dans les parois 15, 16 est facilité par la forme en L de ces parois 15, 16, car cela permet un accès facile, pour des outillages, des deux côtés de chaque volet (15a, 15b), (16a, 16b).

Les surfaces intérieures des extrémités (15f, 15f), (16f, 16f) - dans la direction de la longueur L de l'échangeur 1 - du petit volet 15b, 16b de chaque paroi 15, 16, de part et d'autre du renfoncement 15e, 16e, s'étendent à distance des tranches des tubes 2. Ainsi, au niveau de leurs portions d'extrémités (15f, 15f'), (16f, 16f), les parois 15, 16 ménagent avec les tranches des tubes 2 un volume V (même référence pour tous les volumes concernés); de tels volumes V sont ménagés, aux deux extrémités de l'échangeur 1, de part et d'autre des tubes 2. Ces volumes V sont en communication fluidique avec l'ensemble des canaux 3 d'écoulement d'eau. Les orifices 6, 7 de connexion aux canalisations 8, 9 du circuit d'eau sont ménagées dans ces portions d'extrémités (15f, 15f'), (16f, 16f) des petits volets 15b, 16b des parois 15, 16, c'est-à-dire dans des portions distinctes des renfoncements 15e, 16e; ainsi, l'eau arrive dans l'échangeur 1 ou en ressort par un volume V en communication avec l'ensemble des canaux 3 d'écoulement d'eau. En outre, la présence de ces volumes V permet, comme on le voit sur la figure 8, de ménager un espace suffisant pour le montage des collecteurs 10 à chaque extrémité de l'échangeur 1. On note incidemment ici que la figure 8 est une vue en coupe faite à l'intérieur d'un tube 2; on y voit des éléments parallèles les uns aux autres: il s'agit des parois des ailettes 2' de perturbation du flux d'air.

Grâce à l'agencement des parois 15, 16 et de leurs renfoncements 15e, 16e par rapport aux tubes 2, l'échangeur 1 est alimenté en eau par l'orifice 7 connecté à la canalisation d'entrée d'eau 9 et l'eau s'écoule dans le volume V ménagé à proximité de cet orifice 7, ce qui lui permet de se répartir dans tous les canaux 3 d'écoulement d'eau. L'eau s'écoule dans ces canaux 3 et est empêchée de s'écouler au-delà des tranches des tubes 2, puisque ces dernières sont brasées aux surfaces internes des renfoncements 15e, 16e des petits volets 15b, 16b des parois 15, 16; autrement dit, l'eau est confinée dans les canaux 3 ménagés entre les tubes 2, ce qui maximise les échanges thermiques entre l'eau et l'air qui s'écoule dans les tubes 2. L'eau est collectée en sortie dans le volume V ménagé à proximité de l'orifice 6 connecté à la canalisation de sortie d'eau 8 et l'eau est évacuée par cette canalisation 8.

En fait, les renfoncements 15e, 16e brasés aux tranches des tubes 2 participent à la formation des canaux 3 de circulation d'eau.

On note incidemment que l'eau s'écoule également dans des volumes V ménagés par les extrémités 16f, 16f du petit volet 16b de la deuxième paroi 16; ces volumes V peuvent garantir la bonne répartition de l'eau mais ne sont pas nécessaires; ils sont surtout ménagés parce qu'à des fins d'économie de coûts de fabrication et pour faciliter leur stockage, il est préférable que les parois 15, 16 conformées en L soient de formes extérieures rigoureusement identiques; ainsi, certains éléments peuvent être surabondants mais sont conservés pour tirer avantage de l'identité de forme extérieure des parois 15, 16.

Les portions d'extrémités (15f, 15f'), (16f, 16f) des parois 15, 16 sont rehaussées par rapport au renfoncement 15e, 16e correspondant, ici sur toute leur surface. Bien entendu, l'étendue (dans la direction de la longueur L de l'échangeur 1) de ces portions d'extrémité (15f, 15f'), (16f, 16f) peut varier. De même, leur forme peut varier; par exemple, les portions d'extrémités peuvent être de forme conique autour de l'orifice 6, 7 de réception d'une canalisation 8, 9; dans ce cas, de préférence, les portions d'extrémités 16f, 16f non percées ont la même forme, pour les raisons d'identité de forme extérieure des parois 15, 16 expliquées ci-dessus.

De préférence, les perturbateurs 3' montés dans les canaux 3 d'écoulement d'eau ne s'étendent pas, dans la direction de la longueur L de l'échangeur 1, jusqu'à l'extrémité des tubes 2 et donc pas jusqu'aux collecteurs 10. Ainsi, un volume de collection d'eau sans perturbateurs 3' est ménagé.

Une caractéristique particulière des parois 15, 16 va maintenant être décrite. On voit sur la figure 7 que, à proximité de la zone de contact entre le bord relevé 15c, 16c du petit volet 15b, 16b de chaque paroi 15, 16 et le grand volet 16a, 15a de l'autre paroi 16, 15, il y a une zone où il existe un jeu J avec le coin du collecteur 10 (ces deux jeux diagonalement opposés sur l'échangeur 1 sont désignés par la même référence J). On note qu'il n'y a pas un tel jeu au niveau des arêtes de pliage 15', 16' entre les petits et grands volets (15b, 16b), (15a, 16a) des parois 15, 16, dans la mesure où la surface intérieure de cette arête de pliage 15', 16' épouse en l'espèce la surface extérieure du coin correspondant du collecteur 10.

Du fait de l'existence de ces jeux J, il existe un risque de fuite d'eau à leur niveau. C'est la raison pour laquelle chaque paroi 15, 16 comporte, à proximité de chacun des coins libres de son grand volet 15a, 16a, une portion d'étanchéité P (toutes les portions d'étanchéité de l'échangeur 1 sont désignées par la même référence P). Chaque portion d'étanchéité P se présente sous la forme d'une portion en saillie hors de la surface intérieure du grand volet 15a, 16a de la paroi 15, 16, en direction des tubes 2; cette portion en saillie P a la forme d'un coin ou d'un aileron. Une telle portion P en saillie peut, soit être emboutie sur la paroi 15, 16 postérieurement à sa fabrication, soit être directement formée lors de la fabrication de la paroi 15, 16.

La figure 9 permet de bien comprendre le positionnement et donc la fonction de cette portion d'étanchéité P. On voit clairement que la portion d'étanchéité P vient en contact avec la surface extérieure du coin du collecteur 10 et avec la surface en vis-à-vis de l'arête de pliage 16d du bord relevé 16c du petit volet 16b de la deuxième paroi 16. Les différentes pièces sont brasées au niveau de ces zones de contact, ce qui fait disparaître le jeu J à leur niveau et interdit tout écoulement d'eau. Les portions d'étanchéité P ne sont pas très étendues dans la direction de la longueur L de l'échangeur 1 car il est suffisant qu'elles soient présentes à proximité des collecteurs 10 pour éviter les fuites d'eau. Ainsi, les portions d'étanchéité P sont agencées pour combler un jeu J, au niveau de la zone de fixation de la paroi 15, 16 à laquelle elles appartiennent avec l'autre paroi 16, 15, entre ces parois 15, 16 et les collecteurs 10. Il va de soi que ce qui est décrit dans ce paragraphe s'applique aux quatre portions d'étanchéité P de l'échangeur 1.

On a représenté sur la figure 17 une paroi 15 en L selon une forme de réalisation particulière. Cette paroi 15 ne comporte qu'un seul orifice 6 de connexion à une canalisation d'eau 8, en l'espèce la canalisation 8 de sortie d'eau; cet orifice 6 est, de même que précédemment, ménagé à proximité d'une extrémité du petit volet 15b de la paroi 15. L'autre canalisation d'eau (la canalisation d'entrée 9) est dans ce cas connectée à un orifice ménagé sur l'autre paroi en L (non représentée); elle est de préférence également ménagée sur son petit volet et à son extrémité opposée à celle de la paroi 15 représentée sur la figure 17.

On note que la paroi 15 de la figure 17 comporte deux élargissements E, dans la direction de la hauteur h de l'échangeur 1, ménagés à proximité de chaque extrémité de son grand volet 15a. Ces élargissements E sont ici formés par emboutissage de la paroi 15. Ils sont prévus dans le cas où les dimensions du collecteur 10 sont plus importantes, dans la direction de la hauteur h de l'échangeur 1, que la dimension des petits volets 15b des parois 15 en L; il s'agit donc d'élargissements E (ou emboutis E) de logement du collecteur 10. Ces emboutis E présentent un avantage supplémentaire: dans la mesure où ils logent les collecteurs 10 dans la direction de la hauteur h de l'échangeur 1, ils forment une butée dans la dimension de la longueur L de l'échangeur 1; ainsi, ils forment des moyens de maintien axial (dans cette direction L) des collecteurs 10 et donc de l'ensemble des éléments d'échange 2, 2', 3, 3' lors du brasage de l'ensemble des éléments de l'échangeur 1 (s'ils sont brasés).

On note que de tels élargissements E peuvent être prévus sur des parois conformes à la forme de réalisation des figures 1 à 10 ou à la forme de réalisation des figures 1 à 15. Il en va de même pour la présence d'un seul orifice 6 de connexion à une canalisation d'eau, et ce indépendamment de la présence ou non d'élargissements E. En effet, la différence entre les formes de réalisation des figures 1 à 10 et des figures 11 à 15 tient à leur mode de fixation aux boîtes de distribution de fluide.

La fixation de la boîte collectrice 11 sur l'échangeur 1 va maintenant être décrite. La fixation de la boîte collectrice (non représentée) située du côté droit de l'échangeur 1 ne sera pas décrite mais est bien entendu tout à fait similaire.

La boîte collectrice 11 est maintenue directement par le carter 4 de l'échangeur 1. On remarquera que dans les modes de réalisation illustrés ici, la boite collectrice 11 est maintenue à l'intérieur du carter 4. En d'autres termes, ici, le carter 4 recouvre au moins en partie la boite collectrice 11. Plus particulièrement, le carter 4 enveloppe la partie de la boite collectrice 11 située à proximité (voire en contact) avec le collecteur 10.

Dans la forme de réalisation des figures 1 à 10, la boîte collectrice 11 est métallique et le carter 4 et la boîte 11 sont brasés l'un à l'autre, comme on le voit par exemple sur la figure 3; la boîte 11 peut par exemple être formée en aluminium. A cet effet, le bord d'extrémité de la boîte 11 destiné à être brasé au carter 4 comporte un épaulement 17 qui sert de butée aux extrémités (dans le sens de la longueur L) des parois 15, 16 du carter 4. L'épaulement 17 est agencé pour présenter une surface d'appui de forme complémentaire à la forme de l'extrémité des parois 15, 16 auxquelles la boîte 11 est brasée, pour qu'il y ait continuité de la surface extérieure de l'échangeur 1 entre les parois 15, 16 du carter 4 et la boîte collectrice 11. L'épaulement 17 s'étend de préférence sur toute la périphérie du bord de la boîte collectrice 11. Le brasage entre le carter 4 et la boîte 11 est ainsi facile à mettre en oeuvre.

Le fait que la boîte 11 soit directement fixée au carter 4 réduit l'encombrement de l'échangeur 1. En effet, le collecteur 10 est ainsi contenu à l'intérieur du volume du carter 4 et ne fait pas saillie hors de lui; autrement dit, les dimensions hors tout de l'échangeur 1 sont déterminées par les dimensions du carter 4. Il en résulte une bonne optimisation du débit de fluide s'écoulant dans l'échangeur 1 par rapport à son encombrement. En effet, quelle que soit la configuration de la fixation de la boîte collectrice 11 à l'échangeur 1 (directement au carter ou par l'intermédiaire du collecteur comme dans l'art antérieur), la section maximale d'écoulement des fluides est toujours bridée par les dimensions du carter 4, puisque l'écoulement de tous les fluides se fait à l'intérieur du carter 4. Dans la mesure où la boîte 11 est directement fixée au carter 4, l'encombrement lié à cette liaison peut également être limité à l'encombrement du carter 4; ainsi, l'encombrement hors tout de l'échangeur 1 correspond à l'encombrement du carter 4, qui est directement lié à la section d'écoulement des fluides; l'encombrement est donc optimisé, puisqu'il est minimal pour une section de passage de fluides donnée.

On note sur la figure 10 que la distance d séparant l'extrémité de la boîte collectrice 11 et le collecteur 10 n'est pas nulle. Selon une forme de réalisation, la boîte collectrice 11 peut ainsi être, non pas brasée, mais soudée aux parois 15, 16 du carter 4; cela est possible car, du fait de ladite distance d, le soudage ne risque pas d'entraîner la fonte du brasage des tubes 2 au collecteur 10.

On note que le collecteur 10 est également maintenu par le carter 4, en l'espèce par brasage le long des parois externes 10' de son bord périphérique.

Une deuxième forme de réalisation de l'échangeur 1 est décrite en référence aux figures 11 à 15. Cette forme de réalisation est très similaire à la forme de réalisation précédente et c'est pourquoi les références utilisées pour les éléments de l'échangeur des figures 11 à 15 de structure ou fonction identique, équivalente ou similaire à celles des éléments de l'échangeur des figures 1 à 10 sont les mêmes, pour simplifier la description. D'ailleurs, l'ensemble de la description de l'échangeur des figures 1 à 10 n'est pas reprise, cette description s'appliquant à l'échangeur des figures 11 à 15 lorsqu'il n'y a pas d'incompatibilités. Seules les différences notables, structurelles et fonctionnelles, seront décrites.

L'échangeur 1 des figures 11 à 15 présente la particularité suivante: la boîte collectrice 11 (dont seule la portion d'extrémité est visible) du boîtier de distribution 5, maintenue directement par le carter 4, est fixée à lui, non pas par brasage ou soudage comme décrit précédemment, mais par sertissage.

A cet effet, les extrémités (dans la direction de la longueur L de l'échangeur 1) des parois 15, 16 comportent des pattes 18 de sertissage de la boîte collectrice 11. En l'espèce, les deux volets (15a, 15b), (16a, 16b) de chaque paroi 15, 16 comportent, à chacune de leurs extrémités, des pattes de sertissage 18; les bords d'extrémité de chaque volet (15a, 15b), (16a, 16b) comportent chacun ici trois pattes de sertissage 18 uniformément réparties sur le bord considéré; les pattes de sertissage 18 des grands volets 15a, 16a sont de plus grandes dimensions que les pattes de sertissage 18 des petits volets 15b, 16b.

Le bord d'extrémité de la boîte collectrice 11 qui est destiné à venir en contact avec les parois 15, 16 du carter 4 comporte un rebord 19 d'appui des pattes de sertissage 18; ce rebord 19 forme une gorge de réception des pattes de sertissage 18. Les pattes de sertissage 18 du carter 4 sont recourbées pour être serties dans la gorge de réception de la boîte collectrice 11 et ainsi la maintenir directement. Les pattes 18 du carter 4 coopèrent donc avec une surface de la boîte collectrice 11 (la surface de la gorge du rebord 19) pour le maintien de la boîte 11.

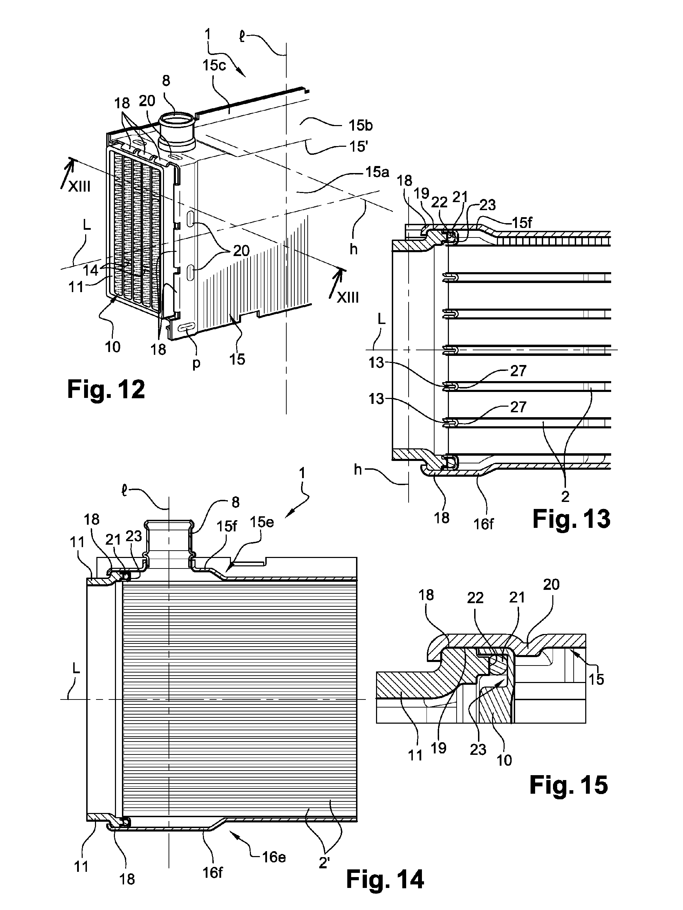

Dans la forme de réalisation présentée, le collecteur 10 est également maintenu par le carter 4. A cet effet, les volets (15a, 15b), (16a, 16b) des parois 15, 16 du carter 4 comportent des butées 20, en l'espèce formées par emboutissage des volets (15a, 15b), (16a, 16b). Ces butées 20 sont en saillie hors de la surface interne des volets (15a, 15b), (16a, 16b). En référence à la figure 15, le bord externe du collecteur 10 est coincé, c'est-à-dire mis en butée de part et d'autre (dans la direction de la longueur L de l'échangeur 1), entre le rebord 19 de la boîte collectrice 11 et les butées 20 des parois 15, 16 du carter 4. Autrement dit, le rebord 19 de la boîte collectrice 11 et le collecteur 10 sont maintenus en position entre les butées 20 et les pattes de sertissage 18 des parois 15, 16 du carter 4; ainsi, par l'effet du sertissage, les pattes 18 exercent une contrainte sur la boîte collectrice 11 et le collecteur 10, qu'elles bloquent en position entre elles et les butées 20. En l'espèce, deux butées 20 sont prévues à proximité de l'extrémité de chaque volet (15a, 15b), (16a, 16b) de chaque paroi 15, 16.

Conformément à la forme de réalisation présentée, un joint d'étanchéité 21 est inséré entre la tranche d'extrémité 22 du bord de la boîte collectrice 11 et une gorge 23 ménagée à la périphérie du collecteur 10; cette gorge 23 s'étend sur toute la périphérie du bord du collecteur 10; elle présente une section en forme de U dont l'ouverture est tournée du côté de la boîte collectrice 11. Ce joint 21 permet d'assurer l'étanchéité à l'air entre la boîte collectrice 11 et le collecteur 10. Il est par exemple formé en élastomère.

On note incidemment que la vue de la figure 15 est une coupe dans un plan situé, au niveau d'une butée 20, entre deux collets 13. C'est la raison pour laquelle on voit, sur cette figure, un espace du côté interne du joint d'étanchéité 21. Cet espace n'est présent qu'entre deux collets 13 et on voit sur les autres figures que le joint 21 est par ailleurs bien écrasé dans la gorge 23 du collecteur 10, remplissant ainsi correctement sa fonction d'étanchéité.

Selon une forme de réalisation alternative, l'étanchéité entre la boîte collectrice 11 et le collecteur 10 auquel elle est fixée est assurée par brasage. A cet effet, la tranche d'extrémité 22 du bord de la boîte collectrice 11 est directement brasée dans la gorge 23. On obtient ainsi un échangeur 1 avec le carter 4 serti à la boîte collectrice 11, cette dernière étant brasée au collecteur 10. Autrement dit, les moyens d'étanchéité entre le collecteur 10 et la boîte collectrice 11 comprennent un lien par brasage.

Quelle que soit la forme de réalisation (étanchéité par joint ou par brasage), l'échangeur 1 avec son carter 4 serti à sa boîte collectrice 11 présente tous les avantages, énoncés ci-dessus en relation avec la première forme de réalisation où ils sont brasés, liés au maintien de la boîte collectrice 11 directement par le carter 4. Il présente en outre tous les avantages liés à la fixation par sertissage. En particulier, il est possible de prévoir une boîte collectrice 11 formée en matière plastique, ce qui n'est pas possible dans le cadre d'une fixation par brasage ou soudage, pour lesquelles la boîte 11 doit être métallique; bien entendu, la fixation de la boîte collectrice 11 au carter 4 par sertissage peut également être mise en oeuvre avec une boîte métallique 11.

On note qu'un tel sertissage de la boîte collectrice 11 par le carter 4 présente un avantage supplémentaire sur les sertissages, connus dans l'art antérieur entre un collecteur et une boîte collectrice: l'épaisseur des parois 15, 16 du carter 4 d'un échangeur 1 est généralement plus importante que l'épaisseur de la paroi formant son collecteur 10 (par exemple 1mm pour la paroi du collecteur 10 contre 2mm pour la paroi du carter 4); cela est d'autant plus vrai pour un collecteur 10 métallique, par exemple en aluminium, qui a déjà reçu un traitement thermique pour son brasage aux autres éléments, ledit traitement ayant affaibli sa résistance mécanique. Comme elle est faite directement par le carter 4, la fixation par sertissage est plus rigide et ne risque pas de se déformer. En outre, le collecteur 10 n'est pas sollicité et ne risque donc pas de se déformer.

Le fonctionnement de l'échangeur 1 (quelle que soit sa forme de réalisation) est le suivant (il est décrit de manière succincte car bien connu de l'homme du métier). De l'air est alimenté au niveau du boîtier 5 de distribution d'entrée d'air, s'écoule dans les tubes 2 (cet écoulement étant perturbé par les ailettes 2') et ressort de l'échangeur 1 par le boîtier (non représenté) de distribution de sortie d'air. Par ailleurs, l'échangeur est alimenté en eau par la canalisation 9 d'entrée d'eau, circule dans les canaux 3 d'écoulement d'eau (cette circulation étant perturbée par les perturbateurs 3') et ressort de l'échangeur 1 par la canalisation 8 de sortie d'eau. Les écoulements d'air et d'eau se font à contresens dans la direction de la longueur L de l'échangeur 1; on parle d'échangeur de chaleur "à contre-courant"; l'efficacité d'un tel échangeur 1 est très bonne.

L'échangeur de chaleur 1 a été décrit en relation avec de l'air circulant dans ses tubes 2 et de l'eau circulant entre les tubes au travers des perturbateurs 3'. Il va de soi que cela pourrait être inversé, c'est-à-dire de l'eau dans les tubes et de l'air entre les tubes. D'ailleurs, il pourrait s'agir d'air dans les deux cas ou d'eau dans les deux cas, ou d'autres fluides.

Les différentes caractéristiques, décrites ci-dessus, des différents éléments de l'échangeur peuvent être combinées ou prévues indépendamment les uns des autres, lorsque c'est compatible.

## Revendications

1. Echangeur de chaleur comportant des éléments (2, 2') d'échange et d'écoulement de fluide, au moins une boîte (11) de collection de fluide dans laquelle débouchent les éléments d'échange (2, 2'), au moins une plaque collectrice (10) de maintien des éléments d'échange (2, 2') et un carter (4) de réception des éléments d'échange (2, 2'), **caractérisé par le fait que** la boîte (11) de collection de fluide est maintenue directement par le carter (4) et **par le fait que** la boîte de collection (11) et le carter (4) sont sertis.

2. Echangeur selon la revendication 1, dans lequel la plaque collectrice (10) est également maintenue par le carter (4).

3. Echangeur selon la revendication 1 ou 2, dans lequel le carter (4) comporte au moins une patte (18) de sertissage de la boîte de collection (11), agencée pour coopérer avec une surface (19) de la boîte de collection (11) pour son maintien.

4. Echangeur selon la revendication 3, dans lequel la plaque collectrice (10) étant également maintenue par le carter (4), le carter (4) comporte au moins une butée (20) et la boîte de collection (11) et la plaque collectrice (10) sont maintenues entre la patte de sertissage (18) et la butée (20).

5. Echangeur selon l'une des revendications précédentes, dans lequel le carter (4) comporte deux parois (15, 16) conformées en L.

6. Echangeur selon l'une des revendications précédentes, comportant des moyens d'étanchéité entre la boîte de collection de fluide (11) et la plaque collectrice (10), par exemple un joint d'étanchéité (21) ou un brasage entre la boîte de collection (11) et la plaque collectrice (10).
